# EUROPÄISCHE PATENTSCHRIFT

(11) **EP 4 016 056 B1**
(45) Veröffentlichungstag und Bekanntmachung des Hinweises auf die Patenterteilung: **26.02.2025**
(21) Anmeldenummer: 21180197.2
(22) Anmeldetag: 18.06.2021
(51) Int. Cl.: G01N 21/64, G01N 21/91, G01N 21/84, G01N 21/90

(54) **VERFAHREN ZUR ERKENNUNG VON ADSORPTIONSUNTERSCHIEDEN, ANLAGERUNGS- UND/ODER RÜCKHALTEBEREICHEN IN TEILWEISE LICHTDURCHLÄSSIGEN BEHÄLTNISSEN**
METHOD FOR DETECTING ADSORPTION DIFFERENCES, ADDITION AND / OR RETENTION AREAS IN PARTIALLY TRANSPARENT CONTAINERS
PROCÉDÉ DE DÉTECTION DES DIFFÉRENCES D'ADSORPTION, DES ZONES DE DÉPÔT ET/OU DE RETENUE DANS DES RÉCIPIENTS PARTIELLEMENT TRANSLUCIDES

(30) Priorität: 16.12.2020 EP 20214760
(43) Veröffentlichungstag der Anmeldung: 22.06.2022
(73) Patentinhaber: Pink, Tomas, 6215 Beromünster (CH)
(72) Erfinder: Pink, Tomas, 6215 Beromünster (CH)
(74) Vertreter: Poljak, Michal

(56) Entgegenhaltungen:
- WO-A1-2013/144215
- JP-U- 3 141 389
- US-A- 3 417 241
- US-A- 4 858 768

## Beschreibung

Die vorliegende Erfindung befasst sich mit der Erkennung von Adsorptionsunterschieden, Anlagerungs- und/oder Rückhaltbereichen in teilweise lichtdurchlässigen Behältnissen, insbesondere "Single-Use Assemblies".

Es ist aus der US 3,965,350 A bekannt, fluoreszierende Farben zur Erkennung von Rissen, vor allem in Metallen, zu nutzen. Auch ist es bekannt, dies unter polarisiertem Licht oder bei Betrachtung durch Polfilter durchzuführen, insbesondere bezogen auf Teile von Turbinen oder Flügeln so aus der US 10,054,552 B1 und US 5,554,318 A oder bezogen auf Metalle im Allgemeinen aus der WO00/60344 A1 oder der JP 2015 094 642 A.

Auch ist eine Anwendung zur Erkennung von Rissen in Zähnen aus der US 4,204,978 A und in Keramikbauteilen aus der WO 00/047982 A1 und in Membranen aus der WO 2013/110458 A1 bekannt. Auch ist die Nutzung zur Erkennung von Spannungen unter polarisiertem Licht und bei Betrachtung durch Polfilter aus der US 2006/192177 A1 bekannt. Auch ist es aus der US 4,400,618 A bekannt, fluoreszierende Farben, die ausgehärtet werden, zu nutzen, um Fehler in Schnitten durch Platinen zu erkennen. Auch lassen sich, wie aus der WO 90/000268 A1 bekannt ist, Schäden an metallischen Rohren unter Wasser durch polarisiertes Licht erkennen. Ebenfalls bekannt ist die Verwendung fluoreszierender Bestandteile in einer Zubereitung zur Beschichtung, um deren Anwesenheit zu kontrollieren aus der CN 110862747 A. Auch werden fluoreszierende Kontrastmittel zur Untersuchung von Geweben unter Nutzung von Polfiltern in der WO 2005/027730 A2 genutzt.

Aus der JP 3 141389 U ist eine Referenzprobe bekannt, die dadurch gebildet wird, dass ein an sich transparentes Gefäß mit einer intransparenten Schicht versehen wird, in die eine Fehlstelle eingebracht wird und das Behältnis mit UV-fluoreszierendem Farbstoff gefüllt und mit UV-Licht bestrahlt wird.

Aus der WO 2013/144215 A1 ist es bekannt zum Training von Qualitätskontrollen durchführenden Mitarbeitern, Stellen mangelhafter Qualität, beispielsweise in Glasampullen, mit UV-fluoreszierendem Farbstoff zu kennzeichnen.

Aus der US 4,858,768 A ist es bekannt, zum Zwecke der Unterscheidung eines kontaminierten von einem unkontaminierten Behältnisses eine dem Behältnis zugesetzte Flüssigkeit, wie destilliertes Wasser, auf Verunreinigung zu messen.

Aus der US 3,417,241 A ist es bekannt, in einem Waschschritt einer Glasflasche der Waschflüssigkeit einen fluoreszierenden Farbstoff beizugeben, und die Glasflasche nach dem Waschschritt und einem Ausspülschritt zu untersuchen.

Aufgabe der Erfindung ist es, Adsorptionsunterschiede, Anlagerungs- und/oder Rückhaltbereiche in zumindest teilweise lichtdurchlässigen Behältnissen erkennbar zu machen, insbesondere von außerhalb der Behältnisse.

Gelöst wird die Aufgabe durch ein Verfahren gemäß Anspruch 1. Vorteilhafte Ausführungsbeispiele des erfindungsgemäßen Verfahrens sind in den abhängigen Ansprüchen definiert.

Gelöst wird die Aufgabe, unter anderem, durch die Nutzung einer einen Farbstoff enthaltenden Flüssigkeit, die mit Licht bestrahlt wird und die Beobachtung der sich durch die unterschiedliche Verteilung des Farbstoffs im Inneren des Behältnis ergebenen Unterschiede in der optischen Ansicht des die Flüssigkeit beinhaltenden Behältnisses von außen.

Durch eine Verwendung eines gelösten Farbstoffs in einem zumindest teilweise lichtdurchlässigen und/oder transparenten Behältnis ist es also möglich, von außen unter Bestrahlung von Licht, insbesondere UV-Licht, insbesondere UV-A Licht, zur Erkennung von Adsorptionsunterschieden, Anlagerungs- und/oder Rückhaltbereichen des Farbstoffs und/oder eines damit verbundenen Moleküls erkennbar zu machen, wobei das Behältnis ein Kunststoffreaktor, nichtmetallisches Fluidsystem, eine Einweg-Baugruppe und/oder ein Einwegaufbau ist.

Vorteilhafterweise handelt es sich bei dem Behältnis um ein Behältnis aus Plastik wie PP, PE, PS (Polystyrene), PA (Polyamide), PC (Polycarbonate), PMMA, PVAC (Polyvinylacetate), PVOH (Polyvinylalcohol), EVA (Ethylvinylacetate), PTFE, und/oder PFA, und/oder
Elastomer wie Silikone und TPE (Thermoplastischen Elastomere), wie C-Flex, Advantaflex, Pure Weld und/oder
Kompositmaterialien wie z.B. Glasfaserkomposite und/oder oder Gemische, Laminate oder Schichtungen von Elastomeren und Plastik.

Lichtdurchlässige und/oder transparent bedeutet insbesondere eine hohe Lichttransmission, insbesondere von mindestens 30%, bevorzugt mindestens 50%, in den/dem und/oder über den/die Wellenlängenbereich(en), in denen die Farbe und/oder Fluoreszenz des Farbstoffs und in den/dem und/oder über den/die Wellenlänge(n) des zum Bestrahlen genutzten Lichts liegt und/oder im und/oder über den sichtbaren und/oder UV-A Bereich. UV-A Bereich umfasst dabei insbesondere den Wellenlängenbereich von 380 bis 315 nm. Insbesondere ist die hohe Lichttransmission, insbesondere mindestens 30%, bevorzugt mindestens 50%, von 315 bis 650 nm gegeben. Dabei muss nicht das gesamte Behältnis lichtdurchlässig und/oder transparent gebildet sein. So können zum Beispiel in manchen Bereichen nicht transparente funktionale Mittel angeordnet sein. Insbesondere ist das Behältnis so beschaffen, dass mindestens 20%, insbesondere 50% bis 100%, insbesondere 100%, der Bereiche der Wandung des Behältnisses, die mit der Flüssigkeit in Berührung gebracht wird, und/oder der Bereiche des Behältnisses, die mit der Flüssigkeit in Berührung gebracht werden, durch transparente und/oder lichtdurchlässige Abschnitte des Behältnisses von außen betrachtbar sind und/oder dass mindestens 20%, insbesondere mindestens 50%, der Wandung des Behältnisses, die mit der Flüssigkeit in Berührung gebracht wird, transparent und/oder lichtdurchlässig ausgebildet sind. Die Betrachtung, Analyse und/oder Aufnahme von außen und insbesondere auch die Bestrahlung von außen, machen die Durchführung einfach, sicher und ermöglichen die Prüfung auch von Bereichen, in denen eine Bestrahlung und/oder Betrachtung von innen nicht oder nur schwer möglich ist.

Besonders vorteilhaft ist die Anwendung des Verfahrens und/oder die Verwendung somit insbesondere an Behältnissen, die mindestens einen Abschnitt aufweisen, der einen freien Innendurchmesser von weniger als 50 mm, insbesondere weniger als 10 mm aufweist und dieser Abschnitt mit der Flüssigkeit in Berührung gebracht wird, bestrahlt wird und betrachtet, analysiert und/oder aufgenommen wird.

Dadurch das der Farbstoff gelöst eingebracht wird, wird eine ausreichende, insbesondere ausreichend homogene Verteilung in der Flüssigkeit und/oder dem Behältnis gewährleistet.

Mit Vorteil erfolgt die Bestrahlung so, dass das Behältnis und/oder die darin enthaltene Flüssigkeit vollständig, zeitgleich oder zeitversetzt, bestrahlt wird.

Mit Vorteil werden mittels der Betrachtung, Analyse und/oder Aufnahme Bereiche mit gegenüber der Umgebung oder dem Mittel erhöhter, insbesondere einen vorbestimmten Grenzwert übersteigender, Farbstoffkonzentration identifiziert. Dabei wird insbesondere davon ausgegangen, dass die Helligkeit des vom Farbstoff emittierten und/oder reflektierten Lichts stetig mit der Farbstoffkonzentration und streng monoton steigt. Mit Vorteil werden somit mittels der Betrachtung, Analyse und/oder Aufnahme Bereiche mit gegenüber der Umgebung oder dem Mittel des Behältnisses erhöhter, insbesondere einen vorbestimmten Grenzwert übersteigender, Helligkeit des vom Farbstoff emittierten und/oder reflektierten Lichts identifiziert. Dadurch lassen sich die Vorteile des Verfahrens besonders gut nutzen.

Mit Vorteil ist die Flüssigkeit eine Penetrantlösung und/oder ist der Farbstoff ein fluoreszierender Farbstoff, insbesondere ein Fluoro- oder Chromophor, ist und/oder ist/sind die Flüssigkeit thixotrop. In einem Ausführungsbeispiel im Einklang mit dem erfindungsgemäßen Verfahren, gemäß Anspruch 1, ist der Farbstoff thixotrop. Dadurch lässt sich eine besonders gute Erkennung erreichen.

Als Farbstoff kann beispielsweise Riboflavin verwendet werden. Dabei wird zur Bestrahlung insbesondere Licht mit einer Wellenlänge von 360 nm verwendet und ist die Transmission, von insbesondere 70% und mehr, insbesondere bei 360 und bei 550 nm gegeben.

Ein weiteres Beispiel ist Fluoreszein. Fluoreszein kann einfach mit unterschiedlichen Biomolekülen kovalent gekoppelt werden, was für zahlreiche Anwendungen bevorzugt ist. Dabei wird zur Bestrahlung insbesondere Licht mit einer Wellenlänge von 480 bis 500 nm verwendet und ist die Transmission, von insbesondere 70% und mehr, insbesondere bei 520 bis 530 nm gegeben.

In einem Ausführungsbeispiel im Einklang mit dem erfindungsgemäßen Verfahren, gemäß Anspruch 1, ist der Farbstoff an mindestens ein Molekül, insbesondere organisches Molekül, insbesondere Biomolekül, insbesondere kovalent, gebunden und, optional, ist er ein Konjugat. Dies ermöglicht die Betrachtung der Adsorptionsunterschieden, Anlagerungs- und/oder Rückhaltbereichen des mindestens einen Moleküls.

In manchen Anwendungen wird es bevorzugt, wenn das Behältnis bei der Betrachtung, Analyse und/oder Aufnahme, insbesondere vollständig, mit der Flüssigkeit gefüllt ist. Dadurch lassen sich Adsorptionsunterschieden, Anlagerungs- und/oder Rückhaltbereichen in allen Bereichen erkennen.

In manchen Anwendungsfällen wird es bevorzugt, alternativ oder insbesondere anschließend an eine erste Betrachtung, Analyse und/oder Aufnahme und/oder während der Betrachtung, Analyse und/oder Aufnahme, insbesondere unter Bestrahlung mit dem Licht, insbesondere dem selben Licht, eine Spülung des Behältnisses und/der ein Ablaufen und/der ein Abpumpen der Flüssigkeit aus dem Behältnis durchgeführt wird und/oder nach der Spülung, dem Ablauf und/oder dem Abpumpen eine weitere Betrachtung, Analyse und/oder Aufnahme unter Bestrahlung mit Licht, insbesondere dem selben Licht, durchgeführt wird. Dadurch lassen sich die Adsorptionsunterschiede, Anlagerungs- und/oder Rückhaltbereiche unter/oder nach der Spülung erkennen. Zur Spülung kann beispielsweise Wasser und/oder Alkohole und/oder eine Wasser und/oder Alkohol enthaltende Flüssigkeit verwendet werden. Beispielsweise bei Fluoreszein als Farbstoff hat es sich als vorteilhaft erwiesen, mit einem Wasser/Alkoholgemisch zu starten und die Alkoholkonzentration während der Spülung langsam zu steigern. Es kann aber beispielsweise auch mit dem im normalen Herstellungsprozess anschließend verwendeten Mittel und/oder einem Prozessbuffer gespült werden. Das Spülen erfolgt insbesondere durch Durchpumpen einer Spülflüssigkeit, insbesondere eines Prozessbuffers, Wasser und/oder Alkohol enthaltenden Flüssigkeit, durch das Behältnis.

Mit besonderem Vorteil handelt es sich bei dem Behältnis um ein thermoplastisches und/oder elastomeres Behältnis, insbesondere Schlauch und/oder Reaktionsgefäß, insbesondere aus thermoplastischem Elastomer. Hier hat sich das Verfahren als besonders zielführend erwiesen.

Bevorzugt erfolgt die Betrachtung, Analyse und/oder Aufnahme hinter einem Polfilter, insbesondere Interferenzfilter, insbesondere linear oder zirkular. Dies erhöht den Kontrast. Mit Vorteil kann die Betrachtung, Analyse und/oder Aufnahme mit unterschiedlichen und/oder unterschiedlich orientiertem Polfilter erfolgen. Dadurch lassen sich einige Adsorptionsunterschiede, Anlagerungs- und/oder Rückhaltbereiche besonders deutlich erkennen.

Bevorzugt erfolgt die Betrachtung, Analyse und/oder Aufnahme unter Bestrahlung mit polarisiertem Licht. Dies erhöht den Kontrast und lässt insbesondere mechanische Beanspruchungen und/oder dadurch entstandene Beschädigungen wie Risse besonders deutlich erkennen. Mit Vorteil kann die Betrachtung, Analyse und/oder Aufnahme unter Bestrahlung mit unterschiedlich polarisiertem, insbesondere linear oder zirkular, und/oder mit unterschiedlich orientiertem polarisiertem Licht erfolgen. Dadurch lassen sich einige Adsorptionsunterschiede, Anlagerungs- und/oder Rückhaltbereiche besonders deutlich erkennen.

Mit Vorteil wird die Flüssigkeit durch das Behältnis gepumpt, insbesondere zumindest auch während der Betrachtung, Analyse und/oder Aufnahme unter Bestrahlung mit dem Licht. Dadurch lassen sich Adsorptionsunterschiede, Anlagerungs- und/oder Rückhaltbereiche in allen Bereichen und die Auswirkung von Strömung erkennen.

Mit besonderem Vorteil wird, ein chemisches und/oder pharmakologisches und/oder biologisches Verfahren, insbesondere Herstellungsverfahren, unter Anwesenheit der Flüssigkeit durchgeführt und während dessen dauerhaft und/oder wiederholt, mindestens zwei mal, insbesondere mehr als zehn mal, insbesondere jeweils in einem zeitlichen Abstand im Bereich von 1 ms bis 30 Tagen, die Betrachtung, Analyse und/oder Aufnahme unter Bestrahlung mit dem Licht durchgeführt. Insbesondere wird der Farbstoff und/der ein daran gebundenes Molekül im Behältnis während der Betrachtung, Analyse und/oder Aufnahme unter Bestrahlung mit dem Licht und/oder zwischen der wiederholten Betrachtung, Analyse und/oder Aufnahme unter Bestrahlung mit dem Licht chemisch und/oder biologisch umgesetzt und/oder verbraucht. Dadurch lassen sich Adsorptionsunterschiede, Anlagerungs- und/oder Rückhaltbereiche während des Prozesses erkennen.

Insbesondere handelt es sich bei dem Behältnis um ein "Single-Use" Behältnis, insbesondere um eine "Single-Use Assembly", insbesondere eine solche die zur Herstellung einer Substanz verwendet wird.

Insbesondere ist die mit der Flüssigkeit in Berührung gebrachte Wandung des Behältnisses und/oder das Behältnis, insbesondere vollständig, aus Kunststoff gebildet.

Unter "Single-Use"-Material wird in dieser Schrift ein Material oder eine Materialmischung verstanden, die bei einer Entsorgung, insbesondere Deponierung und/oder Verbrennung, insbesondere bei Verbrennung bei Temperaturen im Bereich von 800-1150 °C, insbesondere 800 °C und 900 °C, und/oder bei der Wirbelschichtfeuerung und/oder Rostfeuerung, keine gefährlichen Nebenprodukte oder Emissionen freigeben und entweder Rückstandslos verbrennen und/oder zerfallen oder nur Rückstände hinterlassen, die unbedenklich für Mensch und Umwelt sind und/oder solche die die Anforderungen der BImSchG, der BImSchV und/oder Industrial Emissions Directive 2010/75/EU (Integrated Pollution Prevention and Control) in der zum Anmeldezeitpunkt letzten und/oder gültigen Fassung, insbesondere bei Verbrennung bei Temperaturen im Bereich von 800-1150 °C, insbesondere 800 °C und 900 °C, und/oder bei der Wirbelschichtfeuerung und/oder Rostfeuerung, erfüllen. Bevorzugt beinhalten sie keine seltene Elemente oder anders wertvolle Materialien, insbesondere keine Materialien, deren Wert durch die Hitzeeinwirkung um mehr als 50% reduziert wird, insbesondere keine Permanentmagnete. Bevorzugt handelt es sich um Kunststoff, Emaille, Keramik, Stahl, Wolframkarbid, Titannitrid, Aluminiumoxid, Metall-und Halbmetall-Nitride, MetallCarbide, Metall-und Halbmetall-Oxide, Glas- und/oder Kohlenstoffverbundwerkstoff, Glas- und/oder Kohlenstofffasern, Aramid, Aramidharz und/oder Aluminium und Aluminiumlegierungen, Magnesiumlegierungen, bevorzugt um Kunststoff. Als Kunststoff kommt beispielsweise in Betracht Polypropylen, Polyethylen, Po-Iyvinylacetat, Polyethylvinylacetat, PEEK, PET, Polyamide und Polyimide.

Durch das Verfahren lassen sich nicht nur sehr kleine Risse auch im Bereich von 10-20 *µ*m, die nicht einmal durch die gesamte Wandstärke hindurch gehen müssen, eindeutig und einfach erkennen. Auch lassen sich Kavitäten und Totraumvolumen ("Dead Legs") sowie mechanisch überbelastete Stellen sichtbar machen. Dadurch lassen sich Prozesse in dem Behältnis sicherer gestalten und/oder die Reinheit und/oder Ausbeute des im Behältnis ablaufenden Prozesses erhöhen. Aus diesem Grund eignet sich das Verfahren auch zur Qualitätskontrolle und für Produkttests und die Produktenwicklung.

## Patentansprüche

1. Verfahren zur Erkennung von Adsorptionsunterschieden, Anlagerungs- und/oder Rückhaltbereichen in Behältnissen, wobei eine einen Farbstoff enthaltende Flüssigkeit in ein Behältnis eingeführt wird, wobei das Behältnis ein zumindest teilweise lichtdurchlässige(r/s) und/oder transparente(r/s) Kunststoffreaktor, nichtmetallisches Fluidsystem, Einweg-Baugruppe und/oder Einwegaufbau ist und wobei das Behältnis mit darin enthaltender Flüssigkeit, insbesondere von außen, mit Licht, insbesondere UV-Licht, insbesondere UV-A Licht, bestrahlt wird, wobei die sich durch die unterschiedliche Verteilung des Farbstoffs im Inneren des Behältnis ergebenen Unterschiede in der optischen Ansicht des Flüssigkeit beinhaltenden Behältnisses von außen betrachtet, analysiert und/oder aufgenommen werden und der Farbstoff in der Flüssigkeit gelöst in das Behältnis eingeführt wird, wobei
(i) der Farbstoff thixotrop ist und/oder
(ii) der Farbstoff an mindestens ein Molekül gebunden ist und das Verfahren ein Verfahren zur Erkennung von Adsorptionsunterschieden, Anlagerungs- und/oder Rückhaltbereichen des mindestens einen Moleküls in dem Behältnis ist .

2. Verfahren nach Anspruch 1, wobei mittels der Betrachtung, Analyse und/oder Aufnahme Bereiche mit gegenüber der Umgebung oder dem Mittel erhöhter, insbesondere einen vorbestimmten Grenzwert übersteigender, Farbstoffkonzentration identifiziert werden.

3. Verfahren nach einem der vorstehenden Ansprüche, wobei die Bindung des Farbstoffs an das mindestens eine Molekül eine Bindung an ein organisches Molekül, insbesondere Biomolekül, ist.

4. Verfahren nach einem der vorstehenden Ansprüche, wobei die Bindung des Farbstoffs an das mindestens eine Molekül eine kovalente Bindung ist.

5. Verfahren nach einem der vorstehenden Ansprüche, wobei die Flüssigkeit eine Penetrantlösung ist und/oder der Farbstoff ein fluoreszierender Farbstoff, insbesondere ein Fluoro- oder Chromophor, ist.

6. Verfahren nach einem der vorstehenden Ansprüche, wobei der Farbstoff ein Konjugat ist.

7. Verfahren nach einem der vorstehenden Ansprüche, wobei das Behältnis bei der Betrachtung, Analyse und/oder Aufnahme, insbesondere vollständig, mit der Flüssigkeit gefüllt ist.

8. Verfahren nach einem der vorstehenden Ansprüche, wobei während der Betrachtung, Analyse und/oder Aufnahme unter Bestrahlung mit dem Licht eine Spülung des Behältnisses und/der ein Ablaufen und/der ein Abpumpen der Flüssigkeit aus dem Behältnis durchgeführt wird und/oder nach der Spülung, dem Ablauf und/oder dem Abpumpen eine weitere Betrachtung, Analyse und/oder Aufnahme unter Bestrahlung mit Licht, insbesondere dem selben Licht, durchgeführt wird.

9. Verfahren nach einem der vorstehenden Ansprüche, wobei es sich bei dem Behältnis um ein thermoplastisches und/oder elastomeres Behältnis handelt.

10. Verfahren nach einem der vorstehenden Ansprüche, wobei die Betrachtung, Analyse und/oder Aufnahme hinter einem Polfilter, insbesondere Interferenzfilter, erfolgt und/oder das Licht polarisiert ist.

11. Verfahren nach einem der vorstehenden Ansprüche, wobei die Flüssigkeit durch das Behältnis gepumpt wird, insbesondere zumindest auch während der Betrachtung, Analyse und/oder Aufnahme unter Bestrahlung mit dem Licht.

12. Verfahren nach einem der vorstehenden Ansprüche, wobei ein chemisches und/oder pharmakologisches und/oder biologisches Verfahren, insbesondere Herstellungsverfahren, unter Anwesenheit der Flüssigkeit durchgeführt wird und während dessen dauerhaft und/oder wiederholt die Betrachtung, Analyse und/oder Aufnahme unter Bestrahlung mit dem Licht durchgeführt wird.

## Claims

1. A method for detecting adsorption differences, deposition and/or retention areas in containers, wherein a liquid comprising a dye is introduced into a container, wherein the container is an at least partially light-translucent and/or transparent plastic reactor, non-metallic fluid system, disposable assembly and/or disposable structure, and wherein the container with the liquid comprised therein, in particular from the outside, is irradiated with light, in particular UV light, in particular UV-A light, wherein the differences resulting from the different distribution of the dye inside the container are observed, analysed and/or recorded from the outside in the optical view of the container with the liquid comprised therein, and the dye is introduced into the container dissolved in the liquid, wherein
(i) the dye is thixotropic and/or
(ii) is bound to at least one molecule, and the method is a method for detecting adsorption differences, deposition and/or retention areas of the at least one molecule in the container.

2. The method according to claim 1, wherein areas with a dye concentration increased with respect to the surroundings or the medium, in particular by a predetermined limit value, are identified by means of the observation, analysis and/or recording.

3. The method according to any one of the preceding claims, wherein the binding of the dye to the at least one molecule is a bond to an organic molecule, in particular a biomolecule.

4. The method according to any one of the preceding claims, wherein the binding of the dye to the at least one molecule is a covalent bond.

5. The method according to any one of the preceding claims, wherein the liquid is a penetrant solution and/or the dye is a fluorescent dye, in particular a fluorophore or a chromophore.

6. The method according to any one of the preceding claims, wherein the dye is a conjugate.

7. The method according to any one of the preceding claims, wherein the container is filled with the liquid, in particular entirely, when observed, analysed and/or recorded.

8. The method according to any one of the preceding claims, wherein during the observation, analysis and/or recording under irradiation with the light, rinsing of the container and/or draining and/or pumping of the liquid from the container is performed, and/or after the rinsing, the draining and/or the pumping, a further observation, analysis and/or recording is performed under irradiation with light, in particular the same light.

9. The method according to any one of the preceding claims, wherein the container is a thermoplastic and/or elastomeric container.

10. The method according to any one of the preceding claims, wherein the observation, analysis and/or recording takes place behind a polarising filter, in particular an interference filter, and/or the light is polarised.

11. The method according to any one of the preceding claims, wherein the liquid is pumped through the container, in particular at least also during the observation, analysis and/or recording under irradiation with the light.

12. The method according to any one of the preceding claims, wherein a chemical and/or pharmacological and/or biological process, in particular a production process, is performed in the presence of the liquid and during which the observation, analysis and/or recording is performed continuously and/or repeatedly under irradiation with the light.

## Revendications

1. Un procédé de détection des différences d'adsorption, des zones de dépôt et/ou de retenue dans des récipients, où un liquide contenant un colorant est introduit dans un récipient, où le récipient est un réacteur plastique, un système de fluide non métallique, un ensemble jetable et/ou une structure jetable au moins partiellement translucide et/ou transparent(e), et où le récipient contenant du liquide, en particulier depuis l'extérieur, est irradié par une lumière, en particulier une lumière UV, en particulier une lumière UV-A, où les différences résultant de la distribution différente du colorant à l'intérieur du récipient sont observées, analysées et/ou enregistrées depuis l'extérieur dans la vue optique du récipient contenant du liquide, et le colorant est introduit dans le récipient dissous dans le liquide, où
(i) le colorant est thixotrope et/ou
(ii) est lié à au moins une molécule, et le procédé est un procédé de détection de différences d'adsorption, des zones de dépôt et/ou de retenue de l'au moins une molécule dans le récipient.

2. Le procédé selon la revendication 1, où des zones avec une concentration de colorant augmentée, en particulier au-dessus d'une valeur limite prédéterminée, par rapport aux environs où au médium sont identifiées au moyen de l'observation, de l'analyse et/ou de l'enregistrement.

3. Le procédé selon l'une quelconque des revendications précédentes, où la liaison du colorant à l'au moins une molécule est une liaison à une molécule organique, en particulier une biomolécule.

4. Le procédé selon l'une quelconque des revendications précédentes, où la liaison du colorant à l'au moins une molécule est une liaison covalente.

5. Le procédé selon l'une quelconque des revendications précédentes, où le liquide est une solution pénétrante et/ou le colorant est un colorant fluorescent, en particulier un fluorophore ou un chromophore.

6. Le procédé selon l'une quelconque des revendications précédentes, où le colorant est un conjugué.

7. Le procédé selon l'une quelconque des revendications précédentes, où le récipient est rempli avec le liquide, en particulier complètement, pendant l'observation, l'analyse et/ou l'enregistrement.

8. Le procédé selon l'une quelconque des revendications précédentes, où pendant l'observation, l'analyse et/ou l'enregistrement sous irradiation avec la lumière, un rinçage du récipient et/ou un drainage et/ou un pompage du liquide du récipient sont effectués et/ou après le rinçage, le drainage et/ou le pompage, une autre observation, analyse et/ou enregistrement est effectué(e) sous irradiation avec la lumière, en particulier la même lumière.

9. Le procédé selon l'une quelconque des revendications précédentes, où le récipient est un récipient thermoplastique et/ou élastomère.

10. Le procédé selon l'une quelconque des revendications précédentes, où l'observation, l'analyse et/ou l'enregistrement a lieu derrière un filtre polarisant, en particulier un filtre interférentiel, et/ou la lumière est polarisée.

11. Le procédé selon l'une quelconque des revendications précédentes, où le liquide est pompé à travers le récipient, en particulier au moins également pendant l'observation, l'analyse et/ou l'enregistrement sous irradiation avec la lumière.

12. Le procédé selon l'une quelconque des revendications précédentes, où un procédé chimique et/ou pharmacologique et/ou biologique, en particulier un procédé de production, est effectué en présence du liquide et pendant lequel l'observation, l'analyse et/ou l'enregistrement est effectué(e) continuellement et/ou à plusieurs reprises par irradiation avec la lumière.
